# EUROPÄISCHE PATENTSCHRIFT

(11) **EP 1 350 824 B1**
(45) Veröffentlichungstag und Bekanntmachung des Hinweises auf die Patenterteilung: **05.04.2006**
(21) Anmeldenummer: 03006281.4
(22) Anmeldetag: 21.03.2003
(51) Int. Cl.: C09D 175/08, C08G 18/38, C08G 18/08, C08G 18/75

(54) **Polyurethan-Dispersionen auf Basis von Fettsäuredialkanolamiden**
Polyurethane dispersions based on fatty acid dialkanol amides
Dispersions de polyuréthanes à base de dialcanolamides d'acides gras

(30) Priorität: 05.04.2002 DE 10215053
(43) Veröffentlichungstag der Anmeldung: 08.10.2003
(73) Patentinhaber: Bayer MaterialScience AG, 51368 Leverkusen (DE)
(72) Erfinder: Gertzmann, Rolf, Dr., 51377 Leverkusen (DE); Irle, Christoph, Dr., 08960 Sant Just Desvern (ES); Weikard, Jan, Dr., 51519 Odenthal (DE); Roschu, Rolf, 08860 Castelldefels (ES); Lühmann, Erhard, 29699 Bomlitz (DE)

(56) Entgegenhaltungen:
- DE-A- 19 930 961
- US-A- 5 039 732

## Beschreibung

Die Erfindung betrifft wässrige Polyurethan-Dispersionen auf Basis von Fettsäuredialkanolamiden, ein Verfahren zu deren Herstellung und Verwendung als Beschichtungsmittel.

Mit dem Ziel die Emissionen organischer Lösemittel zu senken, werden zunehmend wässrige Beschichtungsmittel an Stelle lösemittelhaltiger Systeme eingesetzt. Eine wichtige Klasse wässriger Lackbindemittel sind die Polyurethan-Dispersionen. Einen Überblick gibt D. Dieterich, Prog. Org. Coatings 9, 281 (1981). Polyurethan-Dispersionen vereinen die wichtigen Eigenschaften der Beständigkeit gegenüber Chemikalien und mechanischer Belastung. Speziell im Bereich der Beschichtung mechanisch stark beanspruchter Flächen ist die Verwendung von Polyurethan-Dispersionen daher von Vorteil.

Von besonderem Interesse ist die Beständigkeit gegenüber Beschädigungen, die durch Schuhabsätze auf Fußbodenbeschichtungen erzeugt werden (Absatzstrichbeständigkeit). Solche Absatzstriche führen besonders bei Beschichtungen mit ausgeprägter Thermoplastizität zu dauerhafter Beschädigung. Eine Verbesserung der Beständigkeit gegenüber derartigen Beschädigungen kann durch eine Vernetzung der Bodenbeschichtung erzielt werden.

Ein Weg zu einer solchen Verbesserung des Eigenschaftsprofils ist die Verwendung hydrophilierter Polyisocyanate, wie z.B. in der EP-A 0 540 985 beschrieben. Wässrige Zwei-Komponenten-(2K)-Polyurethanlacke erreichen ein sehr hohes Eigenschaftsniveau. Aufgrund des vergleichsweise aufwendigen Applikationsverfahrens von 2K-Beschichtungssystemen ist ihr Einsatzgebiet, besonders bei handwerklicher Verarbeitung, begrenzt.

Ein einfacher, aus dem Stand der Technik bekannter Weg zur Herstellung vernetzter Beschichtungen aus Polyurethan-Dispersionen ist der Einbau ungesättigter Einheiten in das Bindemittel (Advances in Urethane Science and Technology, K.C. Frisch, D. Klempner (Hrsg.) Bd. 10, S. 121 - 162 (1987)). Beschichtungen aus solchen Bindemitteln vernetzen durch Reaktion mit Luftsauerstoff (autoxidative Vernetzung). Im Vergleich zur Kombination einer Polyurethan-Dispersion mit einem hydrophilierten Polyisocyanat ist insbesondere die Applikation dieser einkomponentig zu verarbeitenden Bindemittel vereinfacht.

Dispersionen enthaltend Urethangruppen und lufttrocknende Bausteine sind weiterhin beschrieben in der EP-A 0017 199, EP-A 0 379 007, WO-A 97/19120, DE-A 4 004 651, DE-A 4 416 336 und JP-A 6 340 842. Nachteilig an den bislang bekannten, autoxidativ vemetzbaren Polyurethan-Dispersionen ist jedoch, dass die mechanischen Eigenschaften des Lackfilms nicht das hohe Niveau der rein physikalisch trocknenden Polyurethan-Dispersionen erreichen. Dies zeigt sich z.B. in einer verschlechterten Abriebbeständigkeit.

US-A 5,039,732 beschreibt oxidativ trocknende Polyurethandispersionen, die Fettsäurediethanolamide, hergestellt aus Diethanolamin und Fettsäuren bzw. Fettsäurederivaten halbtrocknender und/oder trocknender Öle wie Leinöl oder Sojaöl, als Diolkomponente enthalten. Die Herstellung dieser Produkte führt über sehr hochviskose Zwischenstufen zu wiederum hochviskosen Dispersionen, die bei Feststoffgehalten größer 30 Gew.-% bei Raumtemperatur nicht mehr fließfähig sind und sich somit auch nicht als homogener, dünner Film auf ein Substrat aufbringen lassen.

Ein weiteres Verfahren zur Herstellung ungesättigte Einheiten enthaltender Polyurethan-Dispersionen wird in der EP.A 0 709 414 beschrieben. Durch Verwendung von dehydratisiertem Ricinusöl als alleiniger OH-Komponente oder als Bestandteil der Polyolmischung bei der Herstellung einer Polyurethan-Dispersion werden Produkte mit definiertem Gehalt an C=C-Doppelbindungen erhalten.

Bei der Dehydratisierung von Ricinusöl (siehe z. B. K. T. Achaya, J. Am. Oil Chem. Soc. 48, S. 758 [1971]) wird durch Abspaltung je eines Moleküls Wasser jeweils eine C=C-Doppelbindung erzeugt. Somit ist das in der EP-A 0 709 414 beschriebene Verfahren dahingehend limitiert, dass aus Ricinusöl mit einem bestimmten Gehalt an OH-Gruppen und Doppelbindungen durch Dehydratisierung Produkte mit immer derselben Summe an Hydroxylgruppen und Doppelbindungen erhalten werden. So ist es nach diesem Verfahren z.B. nicht möglich, Produkte mit hohem Gehalt an Doppelbindungen und gleichzeitig hohem Gehalt an OH-Gruppen herzustellen.

In der DE-A 199 30 961 werden Beschichtungen mit guter Absatzstrichbeständigkeit beschrieben, die Umesterungsprodukte aus Ricinusöl und trocknenden/halbtrocknenden Ölen enthalten. Allerdings weisen die Produkte für einzelne Anwendungen, bei denen Pendelhärten (nach König) von größer 90 sec gefordert werden, einen unzureichenden Glanz und/oder schlechtere Filmbildungseigenschaften auf.

Aufgabe der vorliegenden Erfindung war es, Polyurethan-Dispersionen bereitzustellen, die leicht pigmentierbar sind und über gute Filmbildungseigenschaften verfügen. Gleichzeitig sollten die aus diesen Dispersionen hergestellten Beschichtungen eine ausreichende Pendelhärte, bevorzugt über 90 sec sowie eine gute Absatzstrichbeständigkeit und hohen Glanz aufweisen.

Überraschenderweise konnte diese Aufgabe durch die Bereitstellung von Polyurethan-Dispersionen, die in den Polymerketten gesättigte Fettsäuredialkanolamide eingebaut enthalten, gelöst werden. Diese Dispersionen können zu besonders hochwertigen Bodenbeschichtungen verarbeitet werden, wenn zusätzlich ungestättigte, oxidativ trocknende Fettsäuren mitverwendet werden. Neben einer hohen Beständigkeit gegen Wasser/Ethanolgemische und einer guten Absatzstrichbeständigkeit können solche Produkte Pendelhärten von mindestens 90 sec (nach König) aufweisen.

Gegenstand der vorliegenden Erfindung sind wässrige Polyurethan-Dispersionen, hergestellt durch Dispergieren eines polymeren Harzes mit Wasser, wobei das polymere Harz durch Reaktion einer Mischung erhalten wird enthaltend
A) mindestens ein Kondensationsprodukt eines zahlenmittleren Molekulargewichts < 500 aus einer oxidativ nicht trocknenden Fettsäure (i) und einem Dialkanolamin (ii),
B) ein oder mehrere Polyisocyanate,
C) ein oder mehrere hydrophobe, nicht wassermischbare Polyole mit einem zahlenmittleren Molekulargewicht von 500 bis 6000, die keine zur oxidativen Trocknung befähigten Gruppen aufweisen,
D) eine oder mehrere Verbindungen, die eine ionische Gruppe oder eine zur Ausbildung einer ionischen Gruppe befähigte Gruppe enthält/enthalten sowie
E) ein oder mehrere Polyole und/oder Polyamine mit mittleren Molekulargewichten unter 500.

Gegebenenfalls können die erfindungsgemäßen Polyurethan-Dispersionen Monoalkohole und/oder Monoamine (F) und/oder OH- oder NH-funktionelle, nichtionisch hydrophile Polyoxyalkylenether (G) enthalten.

In einer bevorzugten Ausführungsform enthält die erfindungsgemäße Polyurethan-Dispersion eine weitere Komponente (H), die neben mindestens einer zur oxidativen Trocknung befähigten Gruppe, noch mindestens eine gegenüber Isocyanaten reaktive Gruppe aufweist.

Die erfindungsgemäße Polyurethan-Dispersion enthält 0,5 bis 30 Gew.-%, bevorzugt 1 bis 25 Gew.-% und besonders bevorzugt 2 bis 20 Gew.-% an Komponente (A), 5 bis 60 Gew.-%, bevorzugt 15 bis 57 Gew.-% und besonders bevorzugt 25 bis 55 Gew.-% an Komponente (B), 0,5 bis 65 Gew.-%, bevorzugt 2 bis 55 Gew.-% und besonders bevorzugt 5 bis 50 Gew.-% an Komponente (C), 0,5 bis 15 Gew.-%, bevorzugt von 2 bis 14 Gew.-% und besonders bevorzugt von 4 bis 12 Gew.-% an Komponente (D), 0,5 bis 18 Gew.-%, bevorzugt von 2 bis 12 Gew.-% und besonders bevorzugt von 4 bis 10 Gew.-% an Komponente (E) sowie 0 bis 10 Gew.-%, bevorzugt von 0 bis 7 Gew.-% und besonders bevorzugt von 0 bis 2 Gew.-% an Komponente (F) und/oder 0 bis 10 Gew.-%, bevorzugt von 0 bis 7 Gew.-% und besonders bevorzugt von 0 bis 2 Gew.-% an Komponente (G), wobei sich die Prozentangaben auf das Gewicht des Harzfestkörpers beziehen und zu 100 Gew.-% addieren.

Bevorzugt enthält die erfindungsgemäße Polyurethan-Dispersion 0,5 bis 20 Gew.-%, bevorzugt 1 bis 15 Gew.-% und besonders bevorzugt 1,5 bis 10 Gew.-% an Komponente (A), 5 bis 60 Gew.-%, bevorzugt 20 bis 57 Gew.-% und besonders bevorzugt 30 bis 55 Gew.-% an Komponente (B), 0,5 bis 20 Gew.-%, bevorzugt 2 bis 18 Gew.-% und besonders bevorzugt 3 bis 15 Gew.-% an Komponente (C), 0,5 bis 10 Gew.%, bevorzugt von 2 bis 8 Gew.-% und besonders bevorzugt von 2,5 bis 6,5 Gew.-% an Komponente (D), 0,5 bis 20 Gew.-%, bevorzugt von 2 bis 14 Gew.-% und besonders bevorzugt von 4 bis 10 Gew.-% an Komponente (E) sowie 0 bis 10 Gew.-%, bevorzugt von 0 bis 5 Gew.-% und besonders bevorzugt von 0 bis 2 Gew.-% an Komponente (F) und/oder 0 bis 10 Gew.-%, bevorzugt von 0 bis 5 Gew.-% und besonders bevorzugt 0 bis 2 Gew.-% an Komponente (G) und 5 bis 35 Gew.-%, bevorzugt 10 bis 30 Gew.-%, besonders bevorzugt 20 bis 28 Gew.-% an einer Komponente (H), die neben mindestens einer zur oxidativen Trockung befähigten Gruppe, noch mindestens eine, bevorzugt im statistischen Mittel zwei gegenüber Isocyanaten reaktive Gruppe/n aufweist, wobei sich die Prozentangaben auf das Gewicht des Harzfestkörpers beziehen und zu 100 Gew.-% addieren.

Beispiele für Verbindungen (A) sind Produkte, die formal durch Kondensation von oxidativ nicht trocknenden Fettsäuren (i) bzw. Fettsäuregemischen mit Dialkanolaminen (ii) erhalten werden.

Geeignete Verbindungen (i) sind lineare oder verzweigte C₆-C₂₄-Fettsäuren, die aus nicht trocknenden Ölen erhalten werden können. Nichttrocknende Öle sind solche, die auch nach sehr langer Zeit keine Neigung zur Verfilmung zeigen, d.h. sie bleiben immer flüssig. Die Jodzahl solcher nicht trocknender Öle liegt um oder unter 100. Gegebenenfalls können diese Fettsäuren auch weitere - zwischen 0 und 100°C - gegenüber Isocyanaten unter den gewählten Reaktionsbedingungen nicht reaktive funktionelle Gruppen wie z.B. Epoxide aufweisen. Die Herstellung epoxidierter Fettsäurederivate wird in G. Dieckelmann, The basics of industrial Oleochemistry, Oleochemical Consulting Int., Mülheim, 1988 (S. 133 - 144) beschrieben.

Beispiele für nicht trocknende Öle bzw. deren Fettsäuren sind beispielsweise Behensäure, Arachinsäure, Ölsäure, Stearinsäure, Palmitinsäure, Kokosölfettsäure, Erdnussölfettsäure, Olivenkemölfettsäure, Olivenölfettsäure, Mandelölsäure, Kapokölsäure, Haselnussölsäure, Aprikosenkemölsäure, Palmkernölfettsäure, Palmölfettsäure oder Gemischen aus diesen Fettsäuren. Besonders bevorzugte Verbindungen (i) sind solche, die aus natürlichen pflanzlichen oder tierischen Ölen gewonnen werden können, wie z.B. Kokosölfettsäure, Erdnussölfettsäure, Olivenkemölfettsäure, Olivenölfettsäure, Mandelölsäure, Kapokölsäure, Haselnussölsäure, Aprikosenkemölsäure, Palmkemölfettsäure oder Palmölfettsäure oder Gemische aus diesen.

Geeignete Dialkanolamine (ii) sind Verbindungen der allgemeinen Formel (I),

HO-R-NH-R'-OH (I)

in welcher
R und R' für gleiche oder verschiedene C₂-C₉-Alkyl- und/oder Aralkylreste stehen.

Beispiele für Verbindungen der Formel (I) sind 2-[(2-Hydroxyethyl-)-amino-2-methylpropan-1-ol, 1-(2-Hydroxyethylamino)-2-propanol, N-2-Hydroxyethylnorephedrin, Bis-(2-hydroxyethyl)-amin, Bis-(2-hydroxypropyl)-amin, 1,1'-Dimethyl-1,1'-dipropyl-2,2'-iminodiethanol oder 3,3'-Diallyloxy-2,2'-dihydroxy-dipropylamin. Bevorzugte Dialkanolamine (ii) der Formel (I) sind solche, die gleiche Alkylreste R und R' aufweisen, wie z.B. Bis-(2-hydroxyethyl)-amin, Bis-(2-hydroxypropyl)-amin, 1,1'-Dimethyl-1,1'-dipropyl-2,2'-iminodiethanol und 3,3'-Diallyloxy-2,2'-dihydroxy-dipropylamin. Besonders bevorzugt ist Bis-(2-hydroxyethyl)-amin.

Besonders bevorzugt als Komponente (A) sind Kondensationsprodukte aus Kokosölfettsäure und Bis-(2-hydroxyethyl)-amin (kommerziell verfügbar als Rewomid® DC 212 S, Tego Chemie, Essen, Deutschland) sowie Ölsäure und Bis-(2-hydroxyethyl)-amin (kommerziell verfügbar als Comperlan® OD, Fa. Cognis, Düsseldorf, Deutschland) sowie Gemische aus beiden.

Als Komponente (B) sind die üblicherweise in der Polyurethanchemie eingesetzten Polyisocyanate geeignet. Bevorzugt sind Diisocyanate der Formel R¹(NCO)₂, wobei R¹ für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger bevorzugter Diisocyanate sind 1-Isocyanato-3,3,5-trimethyl-5-isocyanatomethylcyclohexan (Isophorondiisocyanat), 4,4'-Diisocyanatodicyclohexylmethan, Tetramethylendiisocyanat, Hexamethylendiisocyanat, 4,4'-Diisocyanatodiphenylmethan, 2,4'-Diisocyanatodiphenylmethan, 2,4-Diisocyanatotoluol, 2,6-Diisocyanatotoluol oder α,α,α' ,α'-Tetra-methyl-*m*- oder -*p*-xylylendiisocyanat sowie Mischungen der genannten Diisocyanate. Besonders bevorzugte Diisocyanate sind 1-Isocyanato-3,3,5-trimethyl-5-isocyanatomethylcyclohexan (Isophorondiisocyanat) und 4,4'-Diisocyanatodicyclohexylmethan sowie Mischungen dieser beiden Diisocyanate.

Es ist ebenfalls möglich z.B. drei- und/oder höherwertige Isocyanate einzusetzen, um somit einen gewissen Verzweigungs- oder Vemetzungsgrad des Polyurethans zu gewährleisten. Derartige Isocyanate werden z.B. erhalten, indem man zweiwertige Isocyanate derart miteinander umsetzt, dass ein Teil ihrer Isocyanatgruppen zu Isocyanurat-, Biuret-, Allophanat-, Uretdion- oder Carbodümidgruppen derivatisiert werden. Auch solche über nichtionische und/oder ionische Gruppen hydrophilierte Polyisocyanate, wie sie üblicherweise als Vernetzer in wässrigen 2K-PUR-Lacken eingesetzt werden, sind geeignet. Beispiele für solche Isocyanate sind- in der EP-A 510 438 beschreiben, wo Polyisocyanate mit OH-funktionellen Carboxylverbindungen umgesetzt werden. Hydrophilierte Polyisocyanate erhält man weiterhin durch Umsetzung von Polyisocyanaten mit gegenüber Isocyanaten reaktiven Verbindugnen, die schwefelsaure Gruppen tragen; diese sind z.B. in der EP-A 0 703 255 beschrieben. Derartige Polyisocyanate können hohe Funktionalitäten, z.B. von mehr als 3, aufweisen.

Geeignete polymere Polyole (C) im Molgewichtsbereich von 500 bis 6000, bevorzugt von 500 bis 3000 und besonders bevorzugt von 650 bis 2500 sind die üblicherweise zur Herstellung von Polyurethanen eingesetzten. Sie weisen eine OH-Funktionalität von 1,8 bis 5, bevorzugt von 1,9 bis 3 und besonders bevorzugt von 1,9 bis 2,0 auf. Es handelt sich zum Beispiel um Polyester, Polyether, Polycarbonate, Polyestercarbonate, Polyacetale, Polyolefine, Polyacrylate und Polysiloxane. Bevorzugt werden Polyester, Polyether, Polyestercarbonate und Polycarbonate eingesetzt. Besonders bevorzugt sind bifunktionelle Polyester, Polyether, Polyestercarbonate und Polycarbonate. Mischungen der beschriebenen polymeren Polyole (C) sind ebenfalls geeignet.

Weitere geeignete Polyole (C) sind solche, die Acrylsäureester- und/oder Methacrylsäureester-Einheiten - im folgenden als (Meth)acrylate bezeichnet - enthalten. Erfindungsgemäße Polyurethandispersionen enthaltend (Meth)acrylate sind dann als Bestandteil von strahlungshärtbaren, bevorzugt von durch ultraviolette Strahlung (UV) härtbaren Beschichtungen geeignet.

Bevorzugt werden hydroxylgruppenhaltige Polyester(meth)acrylate mit einem OH-Gehalt von 30 bis 300 mg KOH/g, bevorzugt 60 bis 130 mg KOH/g eingesetzt. Bei der Herstellung der hydroxyfunktionellen Polyester(meth)acrylate können insgesamt 7 Gruppen von Monomerbestandteilen zur Anwendung kommen:
1. (Cyclo)Alkandiole (d.h. zweiwertige Alkohole mit (cyclo)aliphatisch gebundenen Hydroxylgruppen) des Molekulargewichtsbereichs 62 bis 286, wie z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole mit einem Molekulargewicht von 200 bis 4000, bevorzugt 300 bis 2000, besonders bevorzugt von 450 bis 1200. Umsetzungsprodukte der zuvor genannten Diole mit ε-Caprolacton oder anderen Lactonen können ebenfalls als Diole zum Einsatz gelangen.
2. Drei- und höherwertige Alkohole des Molekulargewichtsbereichs von 92 bis 254, wie z.B. Glycerin, Trimethylolpropan, Pentaerythrit, Dipentaerythrit und Sorbit oder auf diesen Alkoholen gestartete Polyether wie z.B. das Umsetzungsprodukt von 1 mol Trimethylolpropan mit 4 mol Ethylenoxid.
3. Monoalkohole wie z.B. Ethanol, 1- und 2-Propanol, 1- und 2-Butanol, 1-Hexanol, 2-Ethylhexanol, Cyclohexanol oder Benzylälköhol.
4. Dicarbonsäuren des Molekulargewichtsbereichs von 104 bis 600 und/oder deren Anhydride, wie z.B. Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bemsteinsäureanhydrid, Glutarsäure, Adipinsäure, Pimelinsäure, Korksäure, Sebacinsäure, Dodecandisäure oder hydrierte Dimerfettsäuren.
5. Höherfunktionelle Carbonsäuren bzw. deren Anhydride wie z.B. Trimellithsäure und Trimellithsäureanhydrid.
6. Monocarbonsäuren, wie z.B. Benzoesäure, Cyclohexancarbonsäure, 2-Ethylhexansäure, Capronsäure, Caprylsäure, Caprinsäure, Laurinsäure, natürliche und synthetische Fettsäuren.
7. Acrylsäure, Methacrylsäure bzw. dimere Acrylsäure.

Hydroxylgruppenhaltige Polyester(meth)acrylaten enthalten das Umsetzungsprodukt von mindestens einem Bestandteil aus Gruppe 1 und/oder 2 mit mindestens einem Bestandteil aus Gruppe 4 und/oder 5 und mindestens einem Bestandteil aus Gruppe 7.

Gegebenenfalls können in diese Polyester(meth)acrylate auch aus dem Stand der Technik allgemein bekannte, so beispielsweise in Progress in Organic Coatings, 9 (1981), 291 - 296 beschrieben, dispergierend wirkende Gruppen eingebaut werden. So können als Alkoholkomponente anteilig Polyethylenglykole und/oder Methoxypolyethylenglykole verwendet werden. Als Verbindungen seien beispielsweise auf Alkoholen gestartete Polyethylenglykole, Polypropylenglykole und deren Blockcopolymere sowie die Monomethylether dieser Polyglykole genannt. Bevorzugt sind Polyethylenglykol-1500- und/oder Polyethylenglykol-500-mono-methylether.

Weiterhin ist es möglich, nach der Veresterung einen Teil von Carboxylgruppen, bevorzugt die der (Meth)acrylsäure, mit Mono-, Di- oder Polyepoxiden umzusetzen. Bevorzugte Epoxide sind beispielsweise die Epoxide (Glycidylether) von monomeren, oligomeren oder polymeren Bisphenol-A, Bisphenol-F, Hexandiol und/oder Butandiol bzw. deren ethoxilierten und/oder propoxilierten Derivaten. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g.

Die Herstellung von Polyester(meth)acrylaten wird in der DE-A 40 40 290 (S.3 Z. 25 - S.6 Z.24), DE-A 33 16 592 (S. 5 Z. 14 - S. 11 Z.30) und P. K. T. Oldring (Ed.), Chemistry & Technology of UV & EB Formulations For Coatings, Inks & Paints, Vol. 2, 1991, SITA Technology, London, S. 123 bis 135 beschrieben.

Alternativ können auch an sich bekannte hydroxylgruppenhaltige Epoxy(meth)-acrylate, hydroxylgruppenhaltige Polyether(meth)acrylate oder hydroxylgruppenhaltige Polyurethan(meth)acrylate mit OH-Gehalten von 20 bis 300 mg KOH/g eingesetzt werden sowie deren Mischungen untereinander und Mischungen mit hydroxylgruppenhaltigen ungesättigten Polyestern sowie Mischungen mit Polyester-(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London, beschrieben. Hydroxylgruppenhaltige Epoxy(meth)acrylate basieren bevorzugt auf Epoxiden (Glycidylether) von monomeren, oligomeren oder polymeren Bisphenol-A, Bisphenol-F, Hexandiol und/oder Butandiol bzw. deren ethoxilierten und/oder propoxilierten Derivaten.

Erfindungsgemäße Polyurethan-Dispersionen, die ungesättigte (Meth)acrylate als Komponente (C) enthalten, eignen sich für eine Vernetzung durch energiereiche Strahlung z.B. durch UV-Strahlung. Polyurethan-Dispersionen, die ungesättigte (Meth)acrylate enthalten, werden beispielsweise beschrieben in der EP-A 0 753 531 (S. 2 Z. 44 - S. 6 Z. 49), EP-A 0 872 502 (S.3 Z. 4 - S. 12 Z. 19) und EP-A 0 942 022 (S. 4 Z.18 - S. 17Z. 57).

Als Komponente (D) sind niedermolekulare Verbindungen, die anionische Gruppen enthalten oder zur Ausbildung einer ionischen Gruppe befähigt sind, geeignet, wie z.B. Dimethylolpropionsäure, Hydroxypivalinsäure, Umsetzungsprodukte von (Meth-)acrylsäure und Polyaminen (siehe z.B. DE-A-19 750 186, S. 2, Z. 52 - 57) oder Sulfonatgruppen enthaltende Polyolkomponenten wie z.B. das propoxylierte Addukt von Natriumhydrogensulfit an 2-Butendiol oder die in der EP-A 0 364 331 (S. 6, Z. 1 - 6) beschriebenen, aus Salzen der Sulfoisophthalsäure aufgebauten Polyester. Weiterhin geeignet sind OH-funktionelle Verbindungen, die kationische Gruppen oder in kationische Gruppen überführbare Einheiten enthalten wie z.B. N-Methyl-diethanolamin. Bevorzugt sind Hydroxypivalinsäure und/oder Dimethylolpropionsäure.

Ebenfalls geeignet als Komponente (D) ist die Ethylendiamin-β-ethylsulfonsäure, wie in der DE-A 4 236 569 (S. 5 Z. 40 - 44) beschrieben, oder sulfonatgruppenhaltige Diole wie sie in der DE-A 2 446 440 (S. 4-5) beschrieben sind.

Als Komponente (E) kommen Polyole, Aminopolyole oder Polyamine mit einem Molgewicht unter 500 in Frage, die als Kettenverlängerer Verwendung finden können, wie z.B. Ethandiol, 1,4-Butandiol, Cyclohexandimethanol, Trimethylolpropan, Glycerin sowie Hydrazin, Ethylendiamin, 1,4-Diaminobutan, Isophorondiamin, 4,4-Diaminodicyclohexylmethan, Ethanolamin, Dimethylethanolamin und N-Methyldiethanolamin.

Neben dem Einsatz gegenüber Isocyanaten reaktiven polyfunktioneller Verbindungen kommt auch die Terminierung des Polyurethan-Präpolymers mit monofunktionellen Alkoholen oder Aminen (F) in Betracht. Bevorzugte Verbindungen (F) sind aliphatische Monoalkohole oder Monoamine mit 1 bis 18 C-Atomen, besonders bevorzugt werden Ethanol, n-Butanol, Ethylenglykol-monobutylether, 2-Ethylhexanol, 1-Octanol, 1-Dodecanol, 1-Hexadecanol oder Di-N-alkylamine eingesetzt.

Geeignet als Komponente (F) sind ebenfalls mono-hydroxyfunktionelle Ester der Acryl- und/oder Methacrylsäure. Beispiele für solche Verbindungen sind die Mono-(Meth)acrylate zweiwertiger Alkohole wie z.B. Ethandiol, die isomeren Propandiole und Butandiole oder (Meth)acrylate mehrwertiger Alkohole wie z.B. Trimethylolpropan, Glycerin und Pentaerythrit, die im Mittel eine freie Hydroxygruppe enthalten. Dispersionen, die ungesättigte (Meth)acrylate enthalten, eignen sich für eine Vernetzung durch energiereiche Strahlung, bevorzugt durch UV-Strahlung.

Des Weiteren können die erfindungsgemäßen Polyurethan-Dispersionen Polyoxyalkylenether (G) enthalten, die pro Molekül mindestens eine Hydroxy- oder Aminogruppe tragen und z.B. aus einem Alkohol und aus Polyethylenoxid- und/oder Polypropylenpolyethylenoxidblöcken mit einem Molgewicht von 250 bis 3000 bestehen. Bei ausreichendem Anteil dieser nichtionisch hydrophilen Verbindungen ist es auch möglich, auf die Verwendung ionisch hydrophiler Verbindungen gemäß (D) zu verzichten.

Als oxidativ trocknende Komponenten (H) kommen Verbindungen in Frage, die neben gegenüber Isocyanaten im statistischen Mittel 1,5 bis 2,5, bevorzugt 1,8 bis 2,2 und besonders bevorzugt 1,95 bis 2,05 reaktive Gruppen, bevorzugt Hydroxylgruppen aufweisen und zudem im gleichen Molekül trocknende und/oder halbtrocknende Fettsäurereste von Fettsäuren (iii) enthalten. Unter trocknenden Fettsäuren (iii) sind solche zu verstehen, die zumindest als Triglycerid in dünner Schicht auf eine nichtsaugende Unterlage aufgebracht, innerhalb von 2 bis 4 Tagen zu einem festen Film trocknen. Die Jodzahl trocknender Öle ist höher als 170. Halbtrocknende Fettsäuren, zumindest aber deren Triglyceride, bilden ebenfalls einen "festen" Film, jedoch benötigen sie dafür wesentlich länger als trocknende Öle. Ihre Jodzahl liegt im Bereich von 100 bis 170.

Geeignete Fettsäuren (iii) sind aus trocknenden oder halbtrocknenden Ölen gewonnene, wie z.B. Leinölfettsäure, Sojabohnenölfettsäure, Sonnenblumenölfettsäure, Rübölfettsäure und Heringsölfettsäure. Es können auch destillierte Produkte eingesetzt werden, die z.B. überwiegend (> 60 Gew.-%) Linolsäure, Licansäure, Arachidonsäure, Palmitoleinsäure und/oder Linolensäure enthalten. Bevorzugt werden solche Fettsäuren (iii) eingesetzt, die in ihrer Zusammensetzung bzgl. des Fettsäurerestes den natürlich vorkommenden Fettsäuregemischen entsprechen, wie sie aus pflanzlichen oder tierischen Ölen, z.B. Sojabohnenöl, Tallöl, Leinöl oder Sonnenblumenöl gewonnen werden können. Der Fettsäurerest kann auch weitere, gegenüber Isocyanaten zwischen 0°C und 100°C inerte funktionelle Gruppen aufweisen.

Die Komponente (H) enthält, je nach eingesetzter Fettsäure (iii), anteilig zwei oder mehr isolierte und/oder konjugierte Doppelbindungen.

Bevorzugte Verbindungen (H) sind dabei Fettsäurediethanolamide, die durch Reaktion von N,N-Dialkanolaminen (ii) der Formel (I) mit Fettsäuren (iii) oder deren Derivate, wie z.B. Fettsäureester oder Fettsäurechloride erhalten werden. Unter Fettsäurederivate sind solche Derivate zu verstehen, in denen die OH-Gruppe der Carboxylsäuregruppe z.B. durch -Cl oder -OR" ersetzt ist, wobei R" von 1 bis 4 Kohlenstoffatome hat und die Fettsäurederivate reaktiv gegenüber Aminen sind.

Beispiele für Verbindungen der Formel (I) sind Bis-(2-hydroxyethyl)-amin, Bis-(2-hydroxypropyl)-amin, 1,1'-Dimethyl-1,1'-dipropyl-2,2'-iminodiethanol, 3,3'-Diallyloxy-2,2'-dihydroxy-dipropylamin, 2-[(2-Hydroxyethyl-)-amino-2-methylpropan-1-ol, 1-(2-Hydroxyethylamino)-2-propanol oder N-2-Hydroxyethylnorephedrin. Bevorzugte Dialkanolamine (ii) der Formel (I) sind solche, die gleiche Alkylreste R und R' aufweisen, wie z.B. Bis-(2-hydroxyethyl)-amin, Bis-(2-hydroxypropyl)-amin, 1, 1-Dimethyl-1,1'-dipropyl-2,2'-iminodiethanol und 3,3'-Diallyloxy-2,2'-dihydroxydipropylamin. Besonders bevorzugt ist Bis-(2-hydroxyethyl)-amin.

Zur Herstellung der erfindungsgemäßen Polyurethandispersion ist als Komponente (H) ebenfalls bevorzugt partiell dehydratisiertes Ricinusöl, das durch thermische Belastung von Ricinusöl unter saurer Katalyse erhalten wird und in der EP-A 0 709 414 (S. 2, Z. 37-40) beschrieben ist.

Daneben sind auch solche Produkte geeignet, die als Komponente (H) ein oder mehrere Ver- oder Umesterungsprodukt(e) von halbtrocknenden und/oder trocknenden Fettsäuren bzw. Ölen (iii) mit mindestens bifunktionellen Polyolverbindungen enthalten. Solche Umesterungsprodukte sind in der EP-A 0 017 199 (S. 10, Z. 27 bis S. 11 Z. 31) beschrieben. Als Polyolverbindungen werden bevorzugt tri- und tetrafunktionelle Hydroxylkomponenten wie z.B. Trimethylolethan, Trimethylolpropan, Glycerin oder Pentaerythritol verwendet. Neben den bereits genannten ungesättigten Fettsäuren (iii) ist z.B. auch Ricinolsäure geeignet.

In der EP-A 0 640 632 (S. 2 Z. 50 -58 und S.3 Z. 10 - 14) werden weitere geeignete, fettsäurehaltige Produkte beschrieben. Sie werden durch Veresterung von Fettsäuren (iii) aus trocknenden und/oder halbtrocknenden Ölen mit Polyolen erhalten. Die zur Herstellung der Polyurethane zur Anwendung kommenden Komponenten (H) weisen überwiegend (d.h. > 50 Gew.-%) zwei Hydroxylgruppen pro fettsäurehaltigem Molekül auf und sind durch Destillation der Rohmischung, die bei der Umesterung erhalten wird, gewonnen. Als Beispiele für solche Fettsäuren (iii) seien genannt Linolsäure, Licansäure, Arachidonsäure, Palmitoleinsäure und/oder Linolensäure, bevorzugt solche, bei denen es sich um Fettsäuregemische, wie sie aus pflanzlichen oder tierischen Ölen z.B. Sojabohnenöl, Tallöl, Leinöl oder Sonnenblumenöl handelt, die mit Polyolen wie z.B. Trimethylolethan, Trimethylolpropan, Glycerin oder Pentaerythritol umgeestert werden. Bevorzugt sind Umesterungsprodukte aus trocknendnen und/oder halbtrocknenden Ölen wie z.B. dehydriertem Ricinusöl, Sonnenblumenöl, Sojabohnenöl, Leinöl, Tallöl, Olivenöl oder Gemische aus diesen mit Trimethylolethan, Trimethylolpropan, Glycerin oder Pentaerythritol.

Bevorzugte Komponenten (H) sind solche, die in der DE-A 199 30 961 (S. 2 Z. 46 - 54; S. 2 Z. 67 bis S. 3 Z. 3) beschrieben sind. Dort werden aliphatische und cycloaliphatische Monocarbonsäuren mit 8 bis 30 Kohlenstoffatomen wie z.B. Ölsäure, Laurinsäure, Linolsäure oder Linolensäure mit Ricinusöl in Gegenwart von Glycerin umgesetzt. Bevorzugt als Fettsäuren (iii) sind solche, bei denen es sich um Fettsäuregemische (iii) handelt, die aus pflanzlichen oder tierischen Ölen wie z.B. Sojabohnenöl, Tallöl, Leinöl, Sonnenblumenöl oder Olivenöl gewonnen werden können handelt.

Besonders bevorzugt wird die Komponente (H) durch Umesterung von Ricinusöl und einem oder mehreren Triglyceriden mit einer Jodzahl größer 100 erhalten, wie es ebenfalls in der DE-A 199 30 961 (S. 3 Z. 42 - 52, S. 4 Beispiele Vorstufe 1 und Vorstufe 2) beschrieben ist. Ebenfalls geeignet sind Gemische der aufgeführten Komponenten (H).

Die erfindungsgemäßen wässrigen Polyurethandispersionen können hergestellt werden, indem die Komponenten (A), (C) (D), (E) sowie gegebenenfalls (F) und (G) oder (A), (C), (D), (E), (F), (G) und (H) getrennt und in beliebiger Reihenfolge oder als Mischung mit Komponente(n) (B) umgesetzt werden können. Idealerweise werden aminofunktionelle Komponenten (E), (F) und/oder (G) nur dann zugesetzt wenn die Reaktivität gegenüber Isocyanaten moderat ist und es somit nicht zum Vergelen des Ansatzes führt. Eine kontrollierte Reaktion zwischen Isocyanaten und Aminen wird dann erzielt, wenn in der dem Fachmann bekannten Weise die Reaktion in einer ausreichenden Menge Lösungsmittel, das später wie beim Acetonprozess gegebenenfalls wieder abdestilliert werden kann, durchgeführt wird oder die Amine eine verringerte Reaktivität aufweisen, wie z.B. bei Asparaginsäureesteren, die grundlegend in der EP-A 0 403 921 beschreiben sind.

Dabei kann sowohl die Komponente (B) als auch eine oder mehrere der Komponenten (A) und (C-G) oder (C-H) vorgelegt werden. Bevorzugt wird die Komponente (A) gemeinsam mit den Komponenten (C-G) und gegebenenfalls noch Komponente (H) vorgelegt und anschließend mit Komponente (B) umgesetzt. Gegebenenfalls wird ein Lösemittel bzw. ein Lösemittelgemisch eingesetzt, um die Viskosität der Harzmischung zu reduzieren und/oder die Reaktiviät einzelner, gegenüber Isocyanaten reaktiver Verbindungen, insbesondere N-H-funktioneller Komponenten, durch den Verdünnungseffekt abzudämpfen. Das Lösungsmittel kann später wieder abdestilliert werden.

Als Lösemittel geeignet sind die an sich bekannten üblichen Lacklösemittel, wie z.B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Methylethylketon, Cyclohexanon, Toluol, Xylol, Chlorbenzol, Testbenzin, Mischungen, die vor allem höher substituierte Aromaten enthalten, wie sie beispielsweise unter den Bezeichnungen Solvent Naphtha, Solvesso® (Deutsche Exxon, Köln, DE), Cypar® (Shell, Eschborn, DE), Cyclo Sol® (Shell, Eschborn, DE), Tolu Sol® (Shell, Eschborn, DE), Shellsol® (Shell, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Diethylenglykolethyl- und -butyletheracetat und N-Methylcaprolactam oder beliebige Gemische solcher Lösemittel. Bevorzugte Lösungsmittel sind N-Methylpyrrolidon sowie Dipropylenglykoldimethylether.

In einem weiteren Schritt werden zur Neutralisation befähigte Gruppen in die Salzform überführt und durch Zugabe von Wasser zum Polymerharz oder durch Zugabe des Polymerharzes zum Wasser wird eine Dispersion erzeugt. Es ist aber auch möglich hydrophile Komponenten (D) einzusetzen, die bereits bei der Zugabe zum Polyurethanprepolymer in Salzform vorliegen, wie sie z.B. bei der Herstellung von Polyurethandispersionen nach dem Acetonprozess eingesetzt werden.

Geeignete Neutralisationsmittel sind alkalische organische und/oder alkalische anorganische Verbindungen. Bevorzugt sind neben wässriger Ammoniak-, Ethylamin- und Dimethylaminlösung flüchtige primäre, sekundäre und tertiäre Amine, wie z.B. Dimethylethanolamin, Morpholin, N-Methylmorpholin, Piperidin, Diethanolamin, Triethanolamin, Diisopropylamin, 2-Amino-2-methylpropanol und 2-N,N-Dimethylamino-2-methylpropanol oder Gemische dieser Verbindungen. Besonders bevorzugt sind gegenüber Isocyanaten unreaktive tertiäre Amine wie z.B. Triethylamin, Diisopropylethylamin und N-Methylmorpholin. Gemische aus Neutralisationsaminen sind ebenfalls geeignet.

Die Neutralisation des Polyurethans/Polyurethanprepolymers kann aber auch erst in der Wasserphase herbeigeführt werden, indem dem zur Dispergierung verwendeten Wasser eine mit der im Polymer/Prepolymer eingebauten Komponente (D) zur Salzbildung befähigte Komponente in ausreichender Menge zugesetzt wird. Je nach Neutralisationsgrad kann die Dispersion sehr feinteilig eingestellt werden, so dass sie praktisch das Aussehen einer Lösung hat, aber auch sehr grobteilige Einstellungen sind möglich, die ebenfalls ausreichend stabil sind. Auch der Feststoffgehalt kann in weiten Grenzen von z.B. 20 bis 65 % variiert werden. Ein bevorzugter Feststoff bereich erstreckt sich von 35 bis 55 %. Besonders bevorzugt ist ein Feststoffgehalt von 38 bis 45 Gew.-%.

Überschüssige Isocyanatgruppen werden anschließend durch Umsetzung mit polyfunktionellen isocyanatreaktiven Verbindungen (E) zur Reaktion gebracht (Kettenverlängerung). Hierzu werden bevorzugt Polyamine, besonders bevorzugt primäre oder sekundäre Di- sowie Triamine und Hydrazin eingesetzt (Komponente (E)).

Auch die Terminierung mit einem Monoamin (F) wie z.B. Diethylamin, Dibutylamin, Ethanolamin, N-Methylethanolamin oder N,N-Diethanolamin ist möglich.

Die Menge der stickstoffhaltigen, isocyanatreaktiven Komponente(-n) (E und/oder F und/oder G), bevorzugt einer polyfunktionellen Komponente (E) oder einer Mischung polyfunktioneller Komponenten (E), wird so bemessen, dass 45 bis 105 %, besonders bevorzugt 55 bis 90 % der Isocyanatgruppen abreagieren können. Die verbleibenden Isocyanatgruppen reagieren unter Kettenverlängerung mit anwesendem Wasser.

Zur Herstellung von Beschichtungsmitteln werden die erfindungsgemäßen Polyurethan-Dispersionen entweder allein oder in Kombination mit anderen wässrigen Bindemitteln eingesetzt. Solche wässrigen Bindemittel können z.B. aus Polyester-, Polyacrylat, Polyepoxid- oder Polyurethanpolymeren aufgebaut sein. Auch die Kombination mit strahlenhärtbaren wässrigen Bindemitteln ist möglich. Weiterhin ist es möglich, polymerisierbare, vinylisch ungesättigte Monomere in Gegenwart der erfindungsgemäßen Polyurethan-Dispersionen zu polymerisieren, um zu Hybriddispersionen zu gelangen. Hierzu wird in Gegenwart der Polyurethandispersion eine Emulsionspolymerisation von olefinisch ungesättigten Monomeren wie Estern und/oder Amiden aus (Meth)acrylsäure und Alkoholen mit 1 bis 18 C-Atomen, Styrol, Vinylestem oder Butadien durchgeführt. Die Monomere können funktionelle Gruppen wie Hydroxyl- oder Acetoacetoxygruppen sowie eine oder mehrere olefinische Doppelbindungen enthalten.

Weiterhin ist es möglich, vor der Applikation des Beschichtungsmittels enthaltend die erfindungsgemäße Polyurethandispersion Vernetzer zuzusetzen. Hierfür geeignet sind bevorzugt hydrophile und hydrophobe Polyisocyanatvernetzer.

Die erfindungsgemäßen Polyurethan-Dispersionen werden bevorzugt als Bindemittel in Beschichtungen und Klebstoffen verwendet. Beschichtungen auf Basis der erfindungsgemäßen Polyurethan-Dispersionen können auf beliebige Substrate aufgebracht werden, z.B. Holz, Metall, Kunststoff, Papier, Leder, Textilien, Filz, Glas oder mineralische Untergründe sowie auch auf bereits beschichtete Untergründe. Eine besonders bevorzugte Anwendung ist die Beschichtung von Holz- und Kunststoffböden sowie mineralischen Böden.

Die erfindungsgemäßen Polyurethan-Dispersionen können als solche oder in Kombination mit den aus der Lacktechnologie bekannten Hilfs- und Zusatzmitteln wie z.B. Füllstoffen, Pigmenten, Lösungsmitteln, Verlaufshilfsmitteln zur Herstellung von Beschichtungen verwendet werden. Zur Beschleunigung der oxidativen Vernetzung können Sikkative zugesetzt werden. Entsprechend einer weiteren Ausführungsform der Erfindung werden die erfindungsgemäßen Dispersionen unter Zusatz eines oder mehrerer bekannter Fotoinitiatoren in UV-härtenden Beschichtungen eingesetzt. Solche Beschichtungen zeichnen sich gegenüber den UV-härtenden Lacken des Standes der Technik durch eine besondere Haptik aus. Als Fotoinitiatoren eignen sich z.B. aromatische Ketonverbindungen wie Benzophenone, Alkylbenzophenone, 4,4'-Bis-(dimethylamino)-benzophenon (sog. Michlers Keton), Anthron und halogenierte Benzophenone. Weiter geeignet sind Acylphosphinoxide z.B. 2,4,6-Trimethyl-benzoyl-diphenylphosphinoxid, Phenylglyoxylsäureester, Anthrachinon und seine Derivate, Benzilketale und Hydroxyalkylphenone. Es können auch Gemische dieser Verbindungen eingesetzt werden. Üblicherweise werden diese in Mengen von 0,1 bis 10 Gew.%, bevorzugt 0,5 bis 5 Gew.% eingesetzt.

Der Auftrag der Beschichtungsmittel enthaltend die erfindungsgemäße Polyurethan-dispersion kann auf bekannte Weisen, z.B. durch Streichen, Gießen, Rakeln, Spritzen, Sprühen (Vakumat), Schleudern, Walzen oder Tauchen erfolgen. Die Trocknung des Lackfilms kann bei Raumtemperatur oder erhöhter Temperatur, aber auch durch Einbrennen bei bis zu 200°C erfolgen. Sind UV-härtende Bestandteile in den erfindungsgemäßen Dispersionen, so kann der Trocknungsprozess zusätzlich noch eine Bestrahlung mit UV-Licht beinhalten. Bevorzugt wird zunächst Wasser und gegebenenfalls weiteres Lösungsmittel mit bekannten Verfahren aus der Beschichtung entfernt, anschließend erfolgt die Bestrahlung mit UV-Licht und eventuell zuletzt eine weitere Trocknung oder Härtung.

### Beispiele

**Tabelle 1: Eingesetzte Komponenten**

| **Handelsname** | **Bezeichnung** | **Hersteller** |
|---|---|---|
| Arcol® PPG 1000 | Polypropylenglykol, F* = 2, MG ≈ 1000 g/mol | Bayer AG, Leverkusen, DE |
| Rewomid® DC 212 S | Kokosölfettsäurediethanolamid | Tego Chemie, Essen, DE |
| Desmodur® W | 4,4'-Diisocyanatodicyclohexylmethan, trans-trans Gehalt ca. 20 Gew % | Bayer AG, Leverkusen, DE |
| Desmophen® C 200 | Polyestercarbonat F = 2, MG ≈ 2000 g/mol | Bayer AG, Leverkusen, DE |
| Proglyde® DMM | Dipropylenglykoldimethylether | Dow Chemicals, Schwalbach, DE |
| PolyTHF® | Polytetramethylenglykol, F = 2, MG ≈ 2000 g/mol | BASF AG, Ludwigshafen, DE |
| Byk® 028 | Entschäumer | Byk Chemie, Wesel, DE |
| Byk® 024 | Entschäumer | Byk Chemie, Wesel, DE |
| Byk® 346 | Netzmittel | Byk C-hemie; Wesel; DE |
| Kronos® 2190 | Titandioxid | KerrMcGee, Krefeld, DE |
| Tafigel® PUR 50 | Verdicker | Münzing Chemie, Heilbronn, DE |
| Disperbyk® 190 | Dispergierhilfsmittel | Byk Chemie, Wesel, DE |
| Tego® Foamex 805 | Entschäumer | Tego Chemie, Essen, DE |
| Acrysol® RM8 | Verdicker, 5%ig in Wasser | Rohm&Haas, Frankfurt, DE |
| Laromer® PE 44F | Polyesteracrylat | BASF AG, Ludwigshafen, DE |
| Desmodur® I | Isophorondiisocyanat | Bayer AG, Leverkusen, DE |
| Desmodur® H | Hexamethylendiisocyanat | Bayer AG, Leverkusen, DE |
| Irgacure® 500 | Photoinitiator | Ciba Spez.chemie, Lampertheim, DE |

| | | |
|---|---|---|
| F* = Funktionalität gegenüber Isocyanaten | | |

### Polyester-Otigomer-Vorstufe

In einem 51-Reaktor mit Destillationsaufsatz werden 3200 g Ricinusöl und 1600 g Sojaöl sowie 2,4 g Dibutylzinnoxid' eingewogen. Ein Stickstoffstrom (5 1/h) wird durch die Reaktanden geleitet. Innerhalb von 140 min. wird auf 240°C aufgeheizt. Nach 7 h bei 240°C wird abgekühlt. Die OH-Zahl beträgt 89 mg KOH/g, die Säurezahl 2,5 mg KOH/ g.

### PUR-Dispersion 1

90,5 g Arcol® PPG 1000, 265,2 g der Polyester-Oligomer-Vorstufe, 57,4 g Dimethylolpropionsäure, 36,7 g 1,6-Hexandiol, 26,4 g Rewomid® DC 212S und 146,8 g N-Methylpyrrolidon werden auf 70°C aufgeheizt und gerührt, bis eine klare Lösung entstanden ist. Dann werden 514,8 g Desmodur® W zugegeben und auf 100°C aufgeheizt. Bei dieser Temperatur wird gerührt, bis der NCO-Gehalt 5,9 % beträgt. Dann wird auf 70°C abgekühlt und 30,3 g Triethylamin zugegeben. 500 g dieser Lösung werden unter heftigem Rühren in 650 g Wasser, das bei einer Temperatur von 30°C vorgelegt wird, dispergiert. Nach Dispergierung wird 5 min nachgerührt. Dann wird innerhalb von 5 min eine Lösung von 6,2 g Hydrazinhydrat und 10,2 g Ethylendiamin in 100 g Wasser zugegeben. Zur vollständigen Abreaktion der Isocyanatgruppen wird bei 45°C gerührt, bis IR-spektroskopisch kein NCO mehr nachweisbar ist. Nach Abkühlen auf 30°C wird durch ein Seitz T5500-Filter filtriert.

### Kenndaten der Polyurethan-Dispersion:

| | |
|---|---|
| Mittlere Teilchengröße : | 48 nm |
| (Laserkorrelationsspektroskopie, LKS) | |
| pH (20°C): | 7,4 |
| Festgehalt: | 36,0 % |

### PUR-Dispersion 2

340,8 g Desmophen® C 200, 33,0 g Dimethylolpropionsäure, 62,0 g Neopentylglykol, 1,9 g Butylglykol, 18,2 g Rewomid® DC 212 S (Fettsäurediethanolamid aus Kokosölfettsäure, freies Amin [MG = 105] max. 5 %, freie Fettsäure [MG = 200] max. 0,6 %, Estergehalt max. 6 %) und 241,1 g N-Methylpyrrolidon werden auf 70°C aufgeheizt und gerührt, bis eine klare Lösung entstanden ist. Dann werden 407,0 g Desmodur® W zugegeben und auf 100°C aufgeheizt. Bei dieser Temperatur wird gerührt, bis der NCO-Gehalt 3,6 % beträgt. Dann wird auf 70°C abgekühlt und 24,8 g Triethylamin zugegeben. 900 g dieser Lösung werden unter heftigem Rühren in 957 g Wasser, das bei einer Temperatur von 30°C vorgelegt wird, dispergiert. Nach Dispergierung 5 min nachgerührt. Dann wird innerhalb von 5 min eine Lösung von 9,3 g Hydrazinhydrat und 8,2 g Ethylendiamin in 100 g Wasser zugegeben. Zur vollständigen Abreaktion der Isocyanatgruppen wird bei 45°C gerührt, bis IR-spektroskopisch kein NCO mehr nachweisbar ist. Nach Abkühlen auf 30°C wird durch ein Seitz T5500-Filter filtriert.

### Kenndaten der Polyurethan-Dispersion:

| | |
|---|---|
| Mittlere Teilchengröße (LKS): | 49 nm |
| pH (20°C): | 8,2 |
| Festgehalt: | 38% |

### PUR-Dispersion 3

90,5 g PolyTHF® 2000, 31,4 g Dimethylolpropionsäure, 132,6 g der Polyester-Oligomer-Vorstufe, 18,3 g 1,6-Hexandiol, 13,2 g Rewomid® DC 212 S und 80,5 g N-Methylpyrrolidon werden auf 70°C aufgeheizt und gerührt, bis eine klare Lösung entstanden ist. Dann werden 257,4 g Desmodur® W zugegeben und auf 100°C aufgeheizt. Bei dieser Temperatur wird gerührt, bis der NCO-Gehalt 5,0 % beträgt. Dann wird auf 70°C abgekühlt und 16,5 g Triethylamin zugegeben. 400 g dieser Lösung werden unter heftigem Rühren in 510,0 g Wasser, das bei einer Temperatur von 30°C vorgelegt wird, dispergiert. Nach Dispergierung 5 min nachgerührt. Dann wird innerhalb von 5 min eine Lösung von 4,8 g Hydrazinhydrat und 7,7 g Ethylendiamin in 59,4 g Wasser zugegeben. Zur vollständigen Abreaktion der Isocyanatgruppen wird bei 45°C gerührt, bis IR-spektroskopisch kein NCO mehr nachweisbar ist. Nach Abkühlen auf 30°C wird durch ein Seitz T5500-Filter filtriert.

### Kenndaten der Polyurethan-Dispersion:

| | |
|---|---|
| Mittlere Teilchengröße (LKS): | 55 nm |
| pH (20°C): | 7,6 |
| Festgehalt: | 38,5 % |

### Vergleichsbeispiel 1

59,7 g Arcol® PPG 1000, 145,9 g der Polyester-Oligomer-Vorstufe, 31,5 g Dimethylolpropionsäure, 24,9 g 1,6-Hexandiol und 80,8 g N-Methylpyrrolidon werden auf 70°C aufgeheizt und gerührt, bis eine klare Lösung entstanden ist. Dann werden 283,2 g Desmodur® W zugegeben und auf 100°C aufgeheizt. Bei dieser Temperatur wird gerührt, bis der NCO-Gehalt 5,9 % beträgt. Dann wird auf 70°C abgekühlt und 16,6 g Triethylamin zugegeben. 500 g dieser Lösung werden unter heftigem Rühren in 650 g Wasser, das bei einer Temperatur von 30°C vorgelegt wird, dispergiert. Nach Dispergierung 5 min nachgerührt. Dann wird innerhalb von 5 min eine Lösung von 7,0 g Hydrazinhydrat und 11,3 g Ethylendiamin in 100 g Wasser zugegeben. Zur vollständigen Abreaktion der Isocyanatgruppen wird bei 45°C gerührt, bis IR-spektroskopisch kein NCO mehr nachweisbar ist. Nach Abkühlen auf 30°C wird durch ein Seitz T5500-Filter filtriert.

### Kenndaten der Polyurethan-Dispersion:

| | |
|---|---|
| Mittlere Teilchengröße (LKS): | 52 nm |
| pH (20°C): | 7,6 |
| Festgehalt: | 35,7 % |

### Vergleichsbeispiel 2

339 g PolyTHF® 2000, 248 g der Polyester-Oligomer-Vorstufe, 70 g Dimethylolpropionsäure, 34 g 1,6-Hexandiol und 186 g N-Methylpyrrolidon werden auf 70°C aufgeheizt und gerührt, bis eine klare Lösung entstanden ist. Dann werden 516 g Desmodur® W zugegeben und auf 100°C aufgeheizt. Bei dieser Temperatur wird gerührt, bis der NCO-Gehalt 4,6 % beträgt. Dann wird auf 70°C abgekühlt und 39 g Triethylamin zugegeben. 500 g dieser Lösung werden unter heftigem Rühren in 640 g Wasser, das bei einer Temperatur von 30°C vorgelegt wird, dispergiert. Nach Dispergierung 5 min nachgerührt. Dann wird innerhalb von 5 min eine Lösung von 4,1 g Hydrazinhydrat und 10,2 g Ethylendiamin in 100 g Wasser zugegeben. Zur vollständigen Abreaktion der Isocyanatgruppen wird bei 45°C gerührt, bis IR-spektroskopisch kein NCO mehr nachweisbar ist. Nach Abkühlen auf 30°C wird durch ein Seitz T5500-Filter filtriert.

### Kenndaten der Polyurethan-Dispersion:

| | |
|---|---|
| Mittlere Teilchengröße (LKS): | 45 nm |
| pH (20°C): | 8,4 |
| Festgehalt: | 35,0% |

### Vergleichsbeispiel 3

204,5 g Desmophen® C 200, 19,8 g Dimethylolpropionsäure, 47,9 g Neopentylglykol, 1,2 g Butylglykol und 147,7 g N-Methylpyrrolidon werden auf 70°C aufgeheizt und gerührt, bis eine klare Lösung entstanden ist. Dann werden 244,2 g Desmodur® W zugegeben und auf 100°C aufgeheizt. Bei dieser Temperatur wird gerührt, bis der NCO-Gehalt 2,7 % beträgt. Dann wird auf 70°C abgekühlt und 14,9 g Triethylamin zugegeben. 500 g dieser Lösung werden unter heftigem Rühren in 543,5 g Wasser, das bei einer Temperatur von 30°C vorgelegt wird, dispergiert. Nach Dispergierung 5 min nachgerührt. Dann wird innerhalb von 5 min eine Lösung von 4,0 g Hydrazinhydrat und 3,5 g Ethylendiamin in 60 g Wasser zugegeben. Zur vollständigen Abreaktion der Isocyanatgruppen wird bei 45°C gerührt, bis IR-spektroskopisch kein NCO mehr nachweisbar ist. Nach Abkühlen auf 30°C wird durch cin Seitz T5500-Filter filtriert.

### Kenndaten der Polyurethan-Dispersion:

| | |
|---|---|
| Mittlere Teilchengröße (LKS): | 50 nm |
| pH (20°C): | 7,8 |
| Festgehalt: | 35,4 % |

### Prüfung als Parkettlack:

Formulierung von pigmentierten Lacken aus der Polyurethan-Dispersion 1 sowie aus den Vergleichsbeispielen 1 und 2:

Zur Formulierung eines pigmentierten Lacks fügt man zu 60,5 Gew.-Teilen der Dispersionen jeweils folgende Rezepturbestandteile:
3,0 Gew.-Teile Proglyde® DMM, 1,0 Gew.-Teile Byk® 028, 0,2 Gew.-Teile Byk® 24, 0,7 Gew.-Teile Byk® 346 und 3,4 Gev.-Teile Tafigel® PUR 50 (1:1 in Wasser) und vermischt diese Zusammensetzung innig mit einer Mischung aus 8,8 Gew.-Teilen Wasser, 0,2 Gew.-Teilen 2-Amino-2-methyl-1-propanol, 1,7 Gew.-Teilen Disperbyk® 190 und 20,3 Gew.-Teilen Kronos® 2190.

Zur Bestimmung der Filmhärte (Pendeldämpfung nach DIN 53 157) und der Glanzwerte im 60° Winkel (gemessen am Laborreflektometer "HAZE GLOSS" der Fa. Byk Gardner) werden die Lacke mit einer Nassfilm-Schichtstärke von 200 µm auf Glasplatten appliziert. Die Pendelhärte wird bei Glasaufzügen und der Glanz sowohl bei Glas- als auch bei Glanzkartenaufzügen (Glanzkarten der Fa. BYK-Gardner Prüfkartermummer 2853) beurteilt (siehe Tabelle 2).

### Tabelle 2: Glanz und Pendelhärte

| | **Bsp.1** | **Vergleichsbsp. 1** | **Vergleichsbsp.2** |
|---|---|---|---|
| Pendelhärte n. 2d | 105 | 65 | 63 |
| Pendelhärte n. 5d | 105 | 65 | 63 |
| Pendelhärte n. 7d | 110 | 66 | 66 |
| **Glanz 60° Glas** | 79 | 67 | 71 |
| **Glanz 60° Karte** | 78 | 67 | 69 |

Zur Bestimmung der Beständigkeiten gegen Wasser und Ethanol (50 %ige wässrige Lösung) werden Klarlacke in 3 Schichten (jeweils 100 g Lack/m²) auf Eichenholzplatten appliziert, anschließend wird jeweils bei Raumtemperatur getrocknet. Vor Applikation der 2. und 3. Schicht wird die Lackoberfläche leicht angeschliffen.

Zur Formulierung des Klarlacks fügt man zu 100 Gew.-Teilen der Dispersionen jeweils folgende Rezepturbestandteile:
- Colöser:: Butylglykol-Wasser 1:1 (10 Gew.-Teile)
- Entschäumer:: Tego Foamex® 805, Lieferform (0,2 Gew.-Teile)
- Netzmittel:: Byk® 346, Lieferform (0,5 Gew.-Teile)
- Verdicker:: Acrysol® RM8, 5%-ig in Wasser (1,0 Gew.-Teile)

### Beständigkeiten gegen Wasser und Ethanol bestimmt man nach folgender Methode:

Mit dem Lösemittel getränkte Wattebäusche werden auf 7 Tage alte Lackfilme aufgelegt und mit Petrischalen abgedeckt. Nach Einwirkzeiten von 24 Stunden (Wasser) bzw. 30 Minuten (Ethanol) erfolgt die Beurteilung, nachdem die benetzten Filme mit Haushattspapier vorsichtig getrocknet worden sind. Beurteilt werden Beschädigungen in einer Skala von 0 (keine Veränderung) bis 5 (starke Beschädigung, Film aufgelöst).

Die Beurteilung der Absatzstrichbeständigkeit erfolgt durch schlagartiges Verletzen der Filmoberfläche mit einer handelsüblichen Reparatur-Schuhsohle. Beurteilt wird die Erweichung des Lackfilmes bzw, die Absatzstrichbeständigkeit in einer Skala von 0 bis 4:

Zur Bestimmung der Filmhärte (Pendeldämpfung nach DIN 53 157) und der Abriebbeständigkeit (nach DIN 53754; Taber Abraser, CS 10 /1kg/1000 Umdr.) werden die Lacke mit einer Nassfilm-Schichtstärke von 200µm auf Glasplatten appliziert.

**Tabelle 3: Beurteilung der Filmhärte und Abriebbeständigkeit**

| **Wert** | **Erweichung** | **Absatzstrichbeständigkeit** |
|---|---|---|
| 0 | Unverändert | Unverändert |
| 1 | sehr schwach | leichte Spur erkennbar |
| 2 | etwas stärker | leichte Kratzer erkennbar |
| 3 | mit Fingernagel leicht zu beschädigen | Kratzer deutlich erkennbar |
| 4 | lässt sich wegwischen | Oberfläche eingebrannt |

**Tabelle 4: Prüfergebnisse der Filmhärte und Abriebbeständigkeit**

| | **Bsp. 1** | **Bsp. 3** | **Vgl. Bsp. 1** | **Vgl. Bsp. 2** |
|---|---|---|---|---|
| Wasserbeständigkeit 24 h | 0 | 0 | 0 | 0 |
| Ethanol/ Wasser 5min | 1 | 1 | 1 | 1 |
| Ethanol/ Wasser 30 min 30min | 1 | 2 | 1 | 1 |
| Abrieb [mg] | 30 | 22 | 26 | 18 |
| Pendelhärte | 124 | 112 | 106 | 70 |
| Absatzstrichbeständigkeit | 2 | 2 | 2-3 | 2 |

Die Prüfergebnisse zeigen die vergleichsweise gute Absatzstrichbeständigkeit der erfindungsgemäßen PUR-Dispersionen 1, und 3 bei hoher Härte und relativ geringem Abrieb.

### PUR-Dispersion 4 (erfindungsgemäß, UV-härtend)

In einem 21-Reaktionsgefäß mit Rührer, Innenthermometer und Gaseinleitung (Luftstrom 2 bis 3 l/h) werden 334,0 g des Polyesteracrylats Laromer® PE 44F, OH-Gehalt ca. 80 mg KOH/g, sowie 7,80 g Neopentylglykol, 22,0 g Rewomid® DC 212 S, 26,8 g Dimethylolpropionsäure, 0,6 g Dibutylzinndilaurat, 147,5 g Aceton vorgelegt, mit 101,5 g Desmodur® I und 51,1 g Desmodur® H versetzt und derart aufgeheizt, dass ein konstanter Aceton-Rückfluss herrscht. Es wird solange bei dieser Temperatur gerührt, bis die Reaktionsmischung einen NCO-Gehalt von 1,8 Gew.% enthält. Dann wird auf 40°C abgekühlt, und es werden schnell 16,2 g Triethylamin zugegeben. Nach 10 min. wird die Reaktionsmischung unter schnellem Rühren in 933,0 g Wasser von 18°C gegossen. Nachdem sich die Dispersion ausgebildet hat, werden 9,5 g Ethylendiamin in 30,0 g Wasser zugefügt. Nach 30 min Nachrühren ohne Heizen oder Kühlen wird das Produkt im Vakuum (50 mbar, max. 50°C) destilliert, bis ein Festkörper von 39,5 Gew.% erreicht ist. Die Viskosität der Dispersion betrug 16,2 s Auslaufzeit im DIN 4 Becher.

### Kenndaten der Polyurethan-Dispersion:

| | |
|---|---|
| Mittlere Teilchengröße (LKS): | 125 nm |
| pH (20°C): | 8,1 |

In einen Teil der PUR-Dispersion 4 werden 1,5 Gew.% Irgacure® 500 auf Festgehalt der Dispersion berechnet eingerührt. Nach Stehen über Nacht wird die Dispersion mittels eines 150 µm Knochenrakels auf eine Glasplatte aufgezogen. Die beschichtete Glasplatte wird 45 min bei Raumtemperatur gelagert. Es bildet sich ein klarer, transparenter und grifftrockener Film aus. Im Anschluss wird die beschichtete Glasplatte mit einer Geschwindigkeit von 5 m/min unter einem Quecksilberhochdruckstrahler (Leistung 80 W/cm Lampenlänge) herbewegt. Es entsteht ein harter Film mit einer angenehm weichen Haptik.

## Patentansprüche

1. Wässrige Polyurethan-Dispersionen, hergestellt durch Dispergieren eines polymeren Harzes mit Wasser, wobei das polymere Harz durch Reaktion einer Mischung erhalten wird enthaltend
A) mindestens ein Kondensationsprodukt eines zahlenmittleren Molekulargewichts < 500 aus einer oxidativ nicht trocknenden Fettsäure (i) und einem Diallcanolamin (ii),
B) ein oder mehrere Polyisocyanate,
C) ein oder mehrere hydrophobe, nicht wassermischbare Polyole mit einem zahlenmittleren Molekulargewicht von 500 bis 6000, die keine zur oxidativen Trocknung befähigten Gruppen aufweisen,
D) eine oder mehrere Verbindungen, die eine ionische Gruppe oder eine zur Ausbildung einer ionischen Gruppe befähigte Gruppe enthält/enthalten,
E) ein oder mehrere Polyole und/oder Polyamine mit mittleren Molekulargewichten unter 500 sowie
gegebenenfalls
F) Monoalkohole und/oder Monoamine und/oder
G) OH- und/oder NH-funktionelle nichtionisch hydrophile Polyoxyalkylenether.

2. Wässrige Polyurethan-Dispersionen gemäß Anspruch 1, **dadurch gekennzeichnet, dass** Verbindungen (i) ausgewählt sind aus der Gruppe Behensäure, Arachinsäure, Ölsäure, Stearinsäure, Palmitinsäure, Kokosölfettsäure, Erdnussölfettsäure, Olivenkernölfettsäure, Olivenölfettsäure, Mandelölsäure, Kapokölsäure, Haselnussölsäure, Aprikosenkernölsäure, Palmkernölfettsäure, Palmölfettsäure oder aus Gemischen dieser Fettsäuren.

3. Wässrige Polyurethan-Dispersionen gemäß Anspruch 1 oder 2, **dadurch gekennzeichnet, dass** Dialkanolamine (ii) Verbindungen der allgemeinen Formel (I),
HO-R-NH-R'-OH (I)
in welcher
R und R' für gleiche oder verschiedene C₂-C₉-Alkyl- und/oder Aralkylreste stehen,
sind.

4. Wässrige Polyurethan-Dispersionen gemäß einem oder mehreren der Ansprüche 1 bis 3, enthaltend eine weitere Komponente (H), die neben mindestens einer zur oxidativen Trocknung befähigten Gruppe, noch mindestens eine gegenüber Isocyanaten reaktive Gruppe aufweist.

5. Wässrige Polyurethan-Dispersionen gemäß Anspruch 4, **dadurch gekennzeichnet, dass**- die Komponente (H) neben gegenüber Isocyanaten im statistischen Mittel 1,5 bis 2,5 reaktive Gruppen aufweist und zudem im gleichen Molekül trocknende und/oder halbtrocknende Fettsäurereste von Fettsäuren (iii) enthält.

6. Wässrige Polyurethan-Dispersionen gemäß Anspruch 5, **dadurch gekennzeichnet, dass** Fettsäuren (iii) Leinölfettsäure, Sojabohnenölfettsäure, Sonnenblumenölfettsäure, Rübölfettsäure, Heringsölfettsäwe, Linolsäure, Licansäure, Arachidonsäure, Palmitoleinsäwe und/oder Linolensäure sind.

7. Wässrige Polyurethan-Dispersionen gemäß Anspruch 4, **dadurch gekennzeichnet, dass** die Komponente (H) ein Fettsäurediethanolamid ist, das durch Reaktion von N,N-Dialkanolaminen (ii) der allgemeinen Formel (I) mit Fettsäuren (iii) oder deren Derivate erhalten wird.

8. Wässrige Polyurethan-Dispersionen gemäß Anspruch 4, **dadurch gekennzeichnet, dass** die Komponente (H) partiell dehydratisiertes Ricinusöl ist.

9. Wässrige Polyurethan-Dispersionen gemäß Anspruch 4, **dadurch gekennzeichnet, dass** die Komponente (H) ein oder mehrere Ver- oder Umesterungsprodukt/-e von halbtrocknenden und/oder trocknenden Fettsäuren (iii) mit mindestens bifunktionellen Polyolverbindungen ist.

10. Wässrige Polyurethan-Dispersionen gemäß Anspruch 4, **dadurch gekennzeichnet, dass** die Komponente (H) ein Reaktionsprodukt aus aliphatischen und cycloaliphatischen Monocarbonsäuren mit 8 bis 30 Kohlenstoffatomen, Ricinusöl und Glycerin ist.

11. Wässrige Polyurethan-Dispersionen gemäß Anspruch 4, **dadurch gekennzeichnet, dass** die Komponente (H) ein Umesterungsprodukt von Ricinusöl und einem oder mehreren Triglyceriden mit einer Jodzahl-größer 100 ist.

12. Wässrige Polyurethan-Dispersionen gemäß einem oder mehreren der Ansprüche 1 bis 3 enthaltend
0,5 bis 30 Gew.-% an Komponente (A),
5 bis 60 Gew.% an Komponente (B),
0,5 bis 65 Gew.-% an Komponente (C),
0,5 bis 15 Gew.-% an Komponente (D),
0,5 bis 18 Gew.-% an Komponente (E) sowie
0 bis 10 Gew.-% an Komponente (F) und/oder
0 bis 10 Gew.-% an Komponente (G),
wobei sich die Prozentangaben auf das Gewicht des Harzfestkörpers beziehen und zu 100 Gew.% addieren.

13. Wässrige Polyurethan-Dispersionen gemäß einem oder mehreren der Ansprüche 4 bis 11 enthaltend
0,5 bis 20 Gew.-% an Komponente (A),
5 bis 60 Gew.% an Komponente (B),
0,5 bis 20 Gew.% an Komponente (C),
0,5 bis 10 Gew.% an Komponente (D),
0,5 bis 20 Gew.-% an Komponente (E) sowie
0 bis 10 Gew.-% an Komponente (F) und/oder
0 bis 10 Gew.-% an Komponente (G) und
5 bis 35 Gew.-% an einer Komponente (H),
wobei sich die Prozentangaben auf das Gewicht des Harzfestkörpers beziehen und zu 100 Gew.-% addieren.

14. Wässrige Polyurethan-Dispersionen gemäß einem oder mehreren der Ansprüche 1 bis 13, **dadurch gekennzeichnet, dass** die Komponente A) ein Kondensationsprodukt aus Kokosölfettsäure und Bis-(2-hydroxyethyl)-amin und/oder Ölsäure und Bis-(2-hydroxyethyl)-amin ist.

15. Wässrige Polyurethan-Dispersionen gemäß einem oder mehreren der Ansprüche 1 bis 14, **dadurch gekennzeichnet, dass** die Komponente B) 1-Isocyanato-3,3,5-trimethyl-5-isocyanatomethylcyclohexan (Isophorondiisocyanat), 4,4'-Diisocyanatodicyclohexylmethan, Tetramethylendiisocyanat, Hexamethylendiisocyanat, 4,4' -Diisocyanatodiphenylmethan, 2,4'-Diisocyanatodiphenylmethan, 2,4-Diisocyanatotoluol, 2,6-Diisocyanatotoluol oder α,α,α',α'-Tetra-methyl-*m*- oder -*p*-xylylendiisocyanat oder eine Mischung der genannten Verbindungen ist.

16. Wässrige Polyurethan-Dispersionen gemäß einem oder mehreren der Ansprüche 1 bis 15, **dadurch gekennzeichnet, dass** die Komponente C) ein polymeres Polyol im Molgewichtsbereich von 500 bis 6000 mit einer OH-Funktionalität von 1,8 bis 5 ist.

17. Wässrige Polyurethan-Dispersionen gemäß einem oder mehreren der Ansprüche 1 bis 15, **dadurch gekennzeichnet, dass** die Komponente C) Acrylsäureester- und/oder Methacrylsäureester-Einheiten enthält.

18. Wässrige Polyurethan-Dispersionen gemäß Anspruch 17, **dadurch gekennzeichnet, dass** die Komponente C) ein hydroxylgruppenhaltiges Polyester(meth)acrylat mit einem OH-Gehalt von 30 bis 300 mg KOH/g ist.

19. Wässrige Polyurethan-Dispersionen gemäß einem oder mehreren der Ansprüche 1 bis 18, **dadurch gekennzeichnet, dass** die Komponente D) Dimethylolpropionsäure, Hydroxypivalinsäure, ein Umsetzungsprodukt von (Meth)acrylsäure und Polyaminen oder Sulfonatgruppen enthaltende Polyolkomponenten ist.

20. Wässrige Beschichtungsmittel enthaltend die wässrigen Polyurethan-dispersionen gemäß einem oder mehreren der Ansprüche 1 bis 19.

21. Verwendung der wässrigen Polyurethandispersionen gemäß einem oder mehreren der Ansprüche 1 bis 19 in Beschichtungsmitteln und Klebstoffen.

22. Verwendung der wässrigen Polyurethandispersionen gemäß einem oder mehreren der Ansprüche 1 bis 19 in Parkettlacken.

23. Verwendung der wässrigen Polyurethandispersionen gemäß einem oder mehreren der Ansprüche 1 bis 19 in UV-härtenden Beschichtungsmitteln.

## Claims

1. Aqueous polyurethane dispersions prepared by dispersing a polymeric resin with water, where the polymeric resin is obtained by reacting a mixture comprising
A) at least one condensation product, having a number-average molecular weight < 500, of an oxidatively non-drying fatty acid (i) and a dialkanolamine (ii),
B) one or more polyisocyanates,
C) one or more hydrophobic, water-immiscible polyols having a number average molecular weight of from 500 to 6000 and containing no groups capable of oxidative drying,
D) one or more compounds which contains or contain an ionic group or a group capable of forming an ionic group, and
E) one or more polyols and/or polyamines having average molecular weights of below 500, and also
where appropriate
F) monoalcohols and/or monoamines and/or
G) OH- or NH-functional, nonionically hydrophilic polyoxyalkylene ethers.

2. Aqueous polyurethane dispersions according to Claim 1, **characterized in that** compounds (i) are selected from the group consisting of behenic acid, arachidic acid, oleic acid, stearic acid, palmitic acid, coconut oil fatty acid, groundnut oil fatty acid, olive kernel oil fatty acid, olive oil fatty acid, almond oil acid, kapok oil acid, hazelnut oil acid, apricot kernel oil acid, palm kernel oil fatty acid, palm oil fatty acid and mixtures of these fatty acids.

3. Aqueous polyurethane dispersions according to Claim 1 or 2, **characterized in that** dialkonolamines (ii) are compounds of the general formula (I)
HO-R-NH-R'-OH (I)
in which
R and R' stand for identical or different C₂-C₉ alkyl and/or aralkyl radicals.

4. Aqueous polyurethane dispersions according to one or more of Claims 1 to 3, comprising a further component (H) which in addition to at least one group capable of oxidative drying contains at least one isocyanate-reactive group.

5. Aqueous polyurethane dispersions according to Claim 4, **characterized in that** component (H) in addition to isocyanate-reactive groups contains on average from 1.5 to 2.5 reactive groups and additionally contains, in the same molecule, drying and/or semi-drying residues of fatty acids (iii).

6. Aqueous polyurethane dispersions according to Claim 5, **characterized in that** fatty acids (iii) are linseed oil fatty acid, soya bean oil fatty acid, sunflower oil fatty acid, colza oil fatty acid, herring oil fatty acid, linoleic acid, licanic acid, arachidonic acid, palmitoleic acid and/or linolenic acid.

7. Aqueous polyurethane dispersions according to Claim 4, **characterized in that** component (H) is a fatty acid diethanolamide obtained by reacting N,N-dialkanolamines (ii) of the general formula (I) with fatty acids (iii) or derivatives thereof.

8. Aqueous polyurethane dispersions according to Claim 4, **characterized in that** component (H) is partially dehydrated castor oil.

9. Aqueous polyurethane dispersions according to Claim 4 to 8, **characterized in that** component (H) is one or more esterification or transesterification product(s) of semi-drying and/or drying fatty acids (iii) with polyol compounds having a functionality of at least two.

10. Aqueous polyurethane dispersions according to one or more of Claims 4 to 9, **characterized in that** component (H) is a reaction product of aliphatic and cycloaliphatic monocarboxylic acids having from 8 to 30 carbon atoms, castor oil and glycerol.

11. Aqueous polyurethane dispersions according to Claim 4, **characterized in that** component (H) is a transesterification product of castor oil and one or more triglycerides having an iodine number of greater than 100.

12. Aqueous polyurethane dispersions according to one or more of Claims 1 to 3, containing
from 0.5 to 30% by weight of component (A),
from 5 to 60% by weight of component (B),
from 0.5 to 65% by weight of component (C),
from 0.5 to 15% by weight of component (D),
from 0.5 to 18% by weight of component (E), and also
from 0 to 10% by weight of component (F) and/or
from 0 to 10% by weight of component (G),
the percentages being based on the weight of the resin solids and adding up to 100% by weight.

13. Aqueous polyurethane dispersions according to one or more of Claims 4 to 11, containing
from 0.5 to 20% by weight of component (A),
from 5 to 60% by weight of component (B),
from 0.5 to 20% by weight of component (C),
from 0.5 to 10% by weight of component (D),
from 0.5 to 20% by weight of component (E), and also
from 0 to 10% by weight of component (F) and/or
from 0 to 10% by weight of component (G) and
from 5 to 35% by weight of a component (H),
the percentages being based on the weight of the resin solids and adding up to 100% by weight.

14. Aqueous polyurethane dispersions according to one or more of Claims 1 to 13, **characterized in that** component (A) is a condensation product of coconut oil fatty acid and bis(2-hydroxyethyl)amine and/or of oleic acid and bis(2-hydroxyethyl)amine.

15. Aqueous polyurethane dispersions according to one or more of Claims 1 to 14, **characterized in that** component (B) is 1-isocyanato-3,3,5-trimethyl-5-isocyanatomethylcyclohexane (isophorone diisocyanate), 4,4'-diisocyanatodicyclohexylmethane, tetramethylene diisocyanate, hexamethylene diisocyanate, 4,4'-diisocyanatodiphenylmethane, 2,4'-diisocyanatodiphenylmethane, 2,4-diisocyanatotoluene, 2,6-diisocyanatotoluene or α,α,α',α'-tetramethyl-*m*- or -*p*-xylylene diisocyanate or a mixture of the said compounds.

16. Aqueous polyurethane dispersions according to one or more of Claims 1 to 15, **characterized in that** component C) is a polymeric polyol in the molar weight range from 500 to 6000 having an OH functionality of from 1.8 to 5.

17. Aqueous polyurethane dispersions according to one or more of Claims 1 to 15, **characterized in that** component C) comprises acrylic ester and/or methacrylic ester units.

18. Aqueous polyurethane dispersions according to Claim 17, **characterized in that** component C) is a hydroxyl-containing polyester (meth)acrylate having an OH content of from 30 to 300 mg KOH/g.

19. Aqueous polyurethane dispersions according to one or more of Claims 1 to 18, **characterized in that** component D) is dimethylolpropionic acid, hydroxypivalic acid, a reaction product of (meth)acrylic acid and polyamines or sulphonate-functional polyol components.

20. Aqueous coating compositions comprising the aqueous polyurethane dispersions according to one or more of Claims 1 to 19.

21. Use of the aqueous polyurethane dispersions according to one or more of Claims 1 to 19 in coatings and adhesives.

22. Use of the aqueous polyurethane dispersions according to one or more of Claims 1 to 19 in parquet lacquers.

23. Use of the aqueous polyurethane dispersions according to one or more of Claims 1 to 19 in UV-curing coatings.

## Revendications

1. Dispersions aqueuses de polyuréthane, préparées par dispersion d'une résine polymère dans de l'eau, sachant que la résine polymère est obtenue par réaction d'un mélange, contenant
A) au moins un produit de condensation d'un poids moléculaire moyen numérique <500 d'un acide gras (i) non siccatif par oxydation et d'une alcanolamine (ii),
B) un ou plusieurs polyisocyanates,
C) un ou plusieurs polyols hydrophobes non miscibles à l'eau avec un poids moléculaire moyen numérique de 500 à 6000, qui ne comportent aucun groupe apte à une siccativation oxydative,
D) un ou plusieurs composés qui contient/contiennent un groupe ionique ou un groupe apte à la formation d'un groupe ionique,
E) un ou plusieurs polyols et/ou polyamines avec des poids moléculaires moyens en dessous de 500, ainsi que
le cas échéant
F) des monoalcools et/ou des monoamines et/ou
G) des polyoxyalkylènes hydrophiles non ioniques à fonctions OH et/ou NH.

2. Dispersions aqueuses de polyuréthane selon la revendication 1, **caractérisées en ce que** les composés (i) sont choisis parmi le groupe acide de Ben, acide arachidique, acide oléique, acide stéarique, acide palmitique, acide de graisse de coprah, acide de graisse d'arachide, acide de graisse de noyaux d'olive, acide de graisse d'olive, acide d'huile d'amandes, acide d'huile de kapok, acide d'huile de noisettes, acide d'huile de noyaux d'abricots, acide de graisse d'huile de coeur de palmier, acide de graisse d'huile de palme ou parmi des mélanges de ces acides gras.

3. Dispersions aqueuses de polyuréthane selon la revendication 1 ou 2, **caractérisées en ce que** les dialcanolamines (ii) sont des composés de la formule générale (I)
HO-R-NH-R'-OH (I)
dans laquelle
R et R' représentent des radicaux alkyles en C₂ à C₉ et/ou des radicaux aralkyles.

4. Dispersions aqueuses de polyuréthane selon une ou plusieurs des revendications 1 à 3, contenant un autre composant (H) qui, outre au moins un groupe apte à la siccativation oxydative, comporte encore au moins un groupe réactif vis-à-vis des isocyanates.

5. Dispersions aqueuses de polyuréthane selon la revendication 4, **caractérisées en ce que** le composant (H) comporte, outre 1,5 à 2,5 groupes réactifs vis-à-vis des isocyanates en moyenne statistique, et contient en plus dans la même molécule des radicaux d'acides gras siccatifs et/ou semi-siccatifs des acides gras (iii).

6. Dispersions aqueuses de polyuréthane selon la revendication 5, **caractérisées en ce que** les acides gras (iii) sont l'acide de graisse d'huile de lin, l'acide de graisse d'huile de graines de soja, l'acide de graisse d'huile de tournesol, l'acide de graisse d'huile de navette, l'acide de graisse d'huile de hareng, l'acide linoléique, l'acide licanique, l'acide arachidonique, l'acide palmitoléique et/ou l'acide linolénique.

7. Dispersions aqueuses de polyuréthane selon la revendication 4, **caractérisées en ce que** le composant (H) est un diéthanolamide d'acide gras, qui est obtenu par réaction de N,N-dialcanolamines (ii) de la formule générale (I) avec des acides gras (iii) ou leurs dérivés.

8. Dispersions aqueuses de polyuréthane selon la revendication 4, **caractérisées en ce que** le composant (H) est de l'huile de ricin partiellement déshydratée.

9. Dispersions aqueuses de polyuréthane selon la revendication 4, **caractérisées en ce que** le composant (H) est un ou plusieurs produits d'estérification ou de transestérification d'acides semi-siccatifs et/ou siccatifs (iii) avec des composés polyols au moins bifonctionnels.

10. Dispersions aqueuses de polyuréthane selon la revendication 4, **caractérisées en ce que** le composant (H) est un produit de réaction d'acides monocarboxyliques aliphatiques et cycloaliphatiques à 8 à 30 atomes de carbone, d'huile de ricin et de glycérol.

11. Dispersions aqueuses de polyuréthane selon la revendication 4, **caractérisées en ce que** le composant (H) est un produit de transestérification d'huile de ricin et d'un ou plusieurs triglycérides avec un indice d'iode supérieur à 100.

12. Dispersions aqueuses de polyuréthane selon une ou plusieurs des revendications 1 à 3, contenant
0,5 à 30 % en poids du composant (A),
5 à 60 % en poids du composant (B),
0,5 à 65 % en poids du composant (C),
0,5 à 15 % en poids du composant (D),
0,5 à 18 % en poids du composant (E) ainsi que
0 à 10 % en poids du composant (F) et/ou
0 à 10 % en poids du composant (G),
sachant que les données en pour-cent se rapportent au poids de la résine solide et que leur somme donne 100 %.

13. Dispersions aqueuses de polyuréthane selon une ou plusieurs des revendications 4 à 11, contenant
0,5 à 20 % en poids du composant (A),
5 à 60 % en poids du composant (B),
0,5 à 20 % en poids du composant (C),
0,5 à 10 % en poids du composant (D),
0,5 à 20 % en poids du composant (E) ainsi que
0 à 10 % en poids du composant (F) et/ou
0 à 10 % en poids du composant (G) et
5 à 35 % en poids d'un composant (H),
sachant que les données en pour-cent se rapportent au poids de la résine solide et que leur somme donne 100 %.

14. Dispersions aqueuses de polyuréthane selon une ou plusieurs des revendications 1 à 13, **caractérisées en ce que** le composant A) est un produit de condensation d'acide de graisse d'huile de coprah et de bis-(2-hydroxyéthyl)-amine et/ou d'acide oléique et de bis-(2-hydroxyéthyl)-amine.

15. Dispersions aqueuses de polyuréthane selon une ou plusieurs des revendications 1 à 14, **caractérisées en ce que** le composant B) est de l' 1-isocyanato-3,3,5-triméthyl-5-isocyanatométhylcyclohexane (isophoronediisocyanate), du 4,4'-diisocyanatodicyclohexylméthane, du tétraméthylènedüsocyanate, de l'hexaméthylènediisocyanate, du 4,4'-diisocyanatodiphénylméthane, du 2,4'-diisocyanatodiphénylméthane, du 2,4-diisocyanatotoluène, du 2,6-düsocyanatotoluène, ou du α,α,α',α'-tétra-méthyl-*m*- ou *p-*xylylènedüsocyanate ou un mélange des composés susmentionnés.

16. Dispersions aqueuses de polyuréthane selon une ou plusieurs des revendications 1 à 15, **caractérisées en ce que** le composant C) est un polyol polymère dans l'intervalle de poids moléculaire de 500 à 6000 avec une fonctionnalité en OH de 1,8 à 5.

17. Dispersions aqueuses de polyuréthane selon une ou plusieurs des revendications 1 à 15, **caractérisées en ce que** le composant C) contient des unités d'ester d'acide acrylique et/ou des unités d'ester d'acide méthacrylique.

18. Dispersions aqueuses de polyuréthane selon la revendication 17, **caractérisées en ce que** le composant C) est un polyester (méth)acrylique contenant des groupes hydroxyles avec une teneur en OH de 30 à 300 mg de KOH/g.

19. Dispersions aqueuses de polyuréthane selon une ou plusieurs des revendications 1 à 18, **caractérisées en ce que** le composant D) est de l'acide diméthylolpropionique, de l'acide hydroxypivalique, un produit de réaction de l'acide (méth)acrylique et de polyamines ou des composants polyols contenant des groupes sulfonates.

20. Produit d'enduction aqueux contenant les dispersions de polyuréthane selon une ou plusieurs des revendications 1 à 19.

21. Utilisation des dispersions aqueuses de polyuréthane selon une ou plusieurs des revendications 1 à 19 dans des produits d'enduction et des colles.

22. Utilisation des dispersions aqueuses de polyuréthane selon une ou plusieurs des revendications 1 à 19 dans des vernis à parquets.

23. Utilisation des dispersions aqueuses de polyuréthane selon une ou plusieurs des revendications 1 à 19 dans des produits d'enduction durcissant aux UV.
